Europäisches Patentamt

European Patent Office

Office européen des brevets

(11) Publication number: **0 256 834**
**A2**

## (12) EUROPEAN PATENT APPLICATION

(21) Application number: **87307082.5**

(22) Date of filing: **10.08.87**

(51) Int. Cl.³: **G 06 F 15/40**

(30) Priority: **08.08.86 JP 186176/86**
**08.08.86 JP 186177/86**

(43) Date of publication of application:
**24.02.88 Bulletin 88/8**

(84) Designated Contracting States:
**DE FR GB IT NL**

(71) Applicant: **TAJIRI KIKAI KOGYO KABUSHIKI KAISHA**
**19-16 Ohmorikita 1-chome Ohta-ku**
**Tokyo(JP)**

(72) Inventor: **Ishida, Keiko**
**19-303, 1, Toyoshikidai 1-chome**
**Kashiwashi Chiba-ken(JP)**

(74) Representative: **Davies, Christopher Robert et al,**
**Frank B. Dehn & Co. Imperial House 15-19 Kingsway**
**London WC2B 6UZ(GB)**

(54) Electronic dictionary.

(57) In an electronic dictionary data E consisting of a word index (index word) C and the description D for the index word C are stored in a large capacity memory medium or ROM (MCD), and the data E is read from the memory medium by means of a ROM player (4), thereby providing a visual display, printed or sound output. Preferably the index word C is assumed as a parent and the correlated word F related to the index word C is assumed as a child. Thus, the index word C and the correlated word F are displayed whilst being hierarchized. The large capacity memory medium is accommodated into a casing (21) housing the ROM player. In addition, operating means for the electronic dictionary, e.g., a power unit, an input unit, an output display unit, and an operational control unit etc. are also provided in the casing (21). Thus, the electronic dictionary is of unitary structure. The electronic dictionary may be used as an electronic single language dictionary in which the word indexed (index word) C and its description D are indicated in a single language, e.g., an English-English dictionary etc., or may be used as an electronic multiple or plural language dictionary in which the index word C and its description D are indicated in different languages, e.g., an English-Japanese dictionary or the like.

EP 0 256 834 A2

FIG. 1

0256834

Electronic Dictionary

The present invention relates to an electronic dictionary wherein data consisting of words indexed (index words) and the descriptions for or corresponding to the index words C is stored in a large capacity memory medium (ROM), and is from the memory medium by means of a ROM player, thereby making it possible to provide a displayed, printed or sound output.

In recent years, optical disks or compact disks (which will be simply referred to as "CD" hereinafter) have appeared for use as digital storage or memory media for images or music. Applications utilizing the characteristic that a large number of digitally coded messages can be stored are being attempted in various fields.

When the contents of books are memorized by a CD having a capacity smaller than that of the optical disk as electronic books, the contents corresponding from ten to one hundred books can be stored per each CD, thus providing the scale equivalent to that of a small electronic library. It has been recently announced that an electronic dictionary can be made up by storing the contents of an English encyclopedia of about twenty volumes in total into a CD. In this example, the contents of the encyclopedia in twenty volumes were stored only into about 20% of the storage capacity (540 MB) of the CD.

Conventionally, an exchangeable CD player unit for CD has been used while being connected to a personal computer.

When compared to printed dictionaries electronic dictionaries are advantageous in that they are simple to index and have the ability to index at a high speed, and are easy to see because a large-sized character display can be used. On the other hand, the problems therewith are as follows.

(a) Since the electronic dictionaries described above have a large scale comparable to that of electronic libraries, they are useless because their dimensions are too large for use in a portable small electronic dictionary. In addition, they are not easy to use.

(b) Since the conventional electronic dictionaries are made by solely electrically replacing the printed dictionaries, words indexed (index words) and their descriptions (correlated words such as idiomatic phrases or idioms of the index words, or translations etc.) are only displayed on the screen of a CRT etc. successively from the top thereof while being handled at the same level. For this reason, since the index words and the correlated words etc. displayed on the screen disappear therefrom by scrolling on the screen, there occurs an inconvenience in that it is difficult to identify only from the description displayed on

- 3 -                          0256834

the screen that it corresponds to the description of any index word or correlated word.

(c) Since the conventional CDs are not used only for the electronic dictionary, but are exchangeably used for general purpose, the CD reader is constituted so that it is connected to a personal computer or a small computer etc. as a single or independent unit. For this reason, even if combined with a small and low cost personal computer, the entire system will be composed of a plurality of units, giving rise to the drawback that it becomes large-sized and expensive, has poor transportability and portability or carrying-ability and is complicated in operation.

(d) Generally, the CD reader is of a structure allowing a slidable deck to be retracted to set a CD therewithin, to permit a CD to be inserted and withdrawn. This permits easy exchange of many kinds of CDs, thus enabling the CD reader to be widely used for many purposes. However, such a structure becomes complicated and expensive. In addition, the CD reading unit would necessarily communicate with air, so that dust is admitted thereinto from the outside, leading to the likelihood of occurence of error reading or other problems.

(e) IC memory cards or Magnetic bubbles presently available are stable against dust. However, because of their small memory density, they become too large in dimension and expensive when applied to a large capacity storage medium.

Viewed from one aspect the invention provides an electronic dictionary comprising a relatively large capacity memory medium (ROM) for storing data E consisting of index words C and descriptions D corresponding to said index words C, and means for reading said data E from said memory medium to provide a visual display thereof and, optionally, a printed and/or sound output, such means including a display unit having an input display section and an output display section, each having one or more display lines, said descriptions D each including at least one correlated word F related to the corresponding index word C wherein, in use, an index word and/or a correlated word F related to the index word C is/are displayed on said input display section whilst a description D relating to the word displayed on said input display section is displayed on the output display section.

At least in a preferred embodiment, the present invention provides an electronic dictionary which is small and easy in operation, is portable, may be free from faults over a long time and be maintanance-free, and is inexpensive by using, as storage media, micro-compact disks, or IC memory cards or magnetic bubbles or the like which might be available in smaller sizes in the future.

In a preferred embodiment, an index word C is assumed as a parent and a correlated word or words such as an idiomatic phrase or idiom corresponding to the index word C is assumed as a child, thus allowing the index word C and the correlated word F to be hierarchized, whereby the index word C and/or the correlated word F related to the index word C which have been hierarchized are displayed on the input display section of the reading means, e.g a ROM player, whilst the description D or the like corresponding to the word displayed on the input display section is displayed on the output display section.

In a preferred embodiment a large capacity memory medium is incorporated into a casing of a ROM player for reading data from the memory medium to effect display, printing or sound input, thus allowing the electronic dictionary to be of unitary structure, thereby to improve ease of portability.

The preferred electronic dictionary is suitable for non-general use and is easy in operation.

The description D described above preferably includes at least one of a pronunciation symbol for the index word C, the translation of the index word, and a correlated word F related to the index word C i.e. a modified word of a part of speech, modified word of gender, number or time, idiomatic phrase, or idiom or the like.

Preferably, means necessary for the electronic dictionary, e.g., a power unit, an input unit, a display unit, and an operational control unit etc. are also provided within a casing providing an electronic dictionary with a unitary structure.

An electric multiple language dictionary of the preferred embodiment is applicable not only to a single dictionary, e.g., the English-Japanese dictionary and Japanese-English dictionary etc. but also to an electronic dictionary in which two kinds of dictionaries or more indicated or expressed by different languages are accommodated.

An embodiment of the invention will now be described, by way of example only, with reference to the drawings, in which:-

Fig. 1 is a block diagram illustrating the functioning of an electronic dictionary in accordance with the present invention and

Fig. 2 is a perspective view illustrating the structure of an electronic dictionary in accordance with the present invention.

The present invention is intended to provide an electronic dictionary which is small-sized, and is of desk top type or carrying type. To realize this, all of the mechanisms necessary for an electronic dictionary, e.g., a large capacity memory medium, a power unit, an input unit, a display unit, and an operational control unit etc. are accommodated into a casing of a ROM player. Thus, the electronic dictionary is of unitary or single structure.

- 7 -

0256834

To realize the object that an electronic dictionary of the invention is small-sized, stable and inexpensive, and is portable, it is required to prepare a ROM as small as possible, or particularly when a disk is employed, a novel microcompact disk (which is abbreviated as MCD" hereinafter) having a necessary and sufficient memory capacity. For permitting such an electronic dictionary to be received into a breast pocket which is the smallest among pockets of clothing, it is preferable that one side of the small-sized ROM or the outer diameter of MCD is less than 3 inches in view of the dimension of the breast pocket.

When viewed from the number of characters of the dictionary of printed matter, the necessary memory capacity is as follows. Chinese characters require 2B (bytes) for expression of one character. The necessary memory capacities for small, medium and large dictionaries being sold in book stores in connection with the English-Japanese dictionary as a typical example are examined. The results thereof are as follows.

|  | English-Japanese | English-Japanese + Japanese-English |
|---|---|---|
| small dictionary | ∼ 3 MB | ∼ 6 MB |
| medium dictionary | ∼ 6 MB | ∼ 12 MB |
| large dictionary | ∼ 40 MB | ∼ 80 MB |

Since it is desirable that the "English-Japanese" dictionary and the "Japanese-English" dictionary are used in a pair from a viewpoint of practical use, it is desirable that the capacity is approximately two times the capacity of the English-Japanese dictionary. It is enough that the capacity is less than 128 MB even if the capacity is estimated sufficiently. Even in the case of a small "English-Japanese" dictionary in respect of which memory capacity is minimum, a capacity of more than 2 MB is required.

For a memory card as a small-sized ROM, except for a disk, it will be provided with mask ROM, EPROM, or EEPROM etc. because of necessity of non-volatile property. However, the memory medium has a low memory density, e.g., 256 K bit to 1 M bit per each chip. When an electronic dictionary having memory capacity of 2 MB which is an example of the minimum memory capacity is made up, 96 to 24 chips are required. The electronic dictionary becomes large-sized and expensive. The magnetic bubbles are non-volatile and have a relatively high memory density (4M bit/chip). However, the dimension of the peripheral magnetic circuit/drive circuit per each chip is large. When an electronic dictionary having a memory capacity of 3 MB is made up, the dimension is too large and its cost is also too high.

However, both memory densities of memory cards and magnetic bubbles increase four times about every three years. Accordingly, it is expected that they will become small-sized and inexpensive to an extent that they can be put to practical use. Further, in the case of languages using phonetic symbols or characters, the necessary capacity is reduced to about one half. Such an electronic dictionary may be realized early. Accordingly, the memory card and the magnetic bubble could be used for the small-sized ROM of the invention. They include no movable parts so that they are hardly influenced by dust or vibration etc. An explanation will however be made in connection with the case where the MCD, which can be realized at present, is used.

It is desirable that the dictionary of the invention can be used immediately when powered. For this purpose, it is desirable that the MCD is incorporated within the ROM player without inserting the MCD into the ROM player or detaching it therefrom every use. However, if the MCD is left for a long time while being incorporated therein, or is carried within a pocket or a bag, dust may be admitted to the MCD, with the result that trouble or error reading is likely to occur.

Accordingly, the MCD and a track selection mechanism for which precision is required are accommodated into an accommodating unit of dust-proof structure connected to the outside through the drive shaft of the track selection mechanism and an electric wire, thus preventing dust from being admitted. By opening and closing the cover of the accommodating unit, the exchange of the MCD is carried out. The cover, the penetration shaft, and the penetration electric wire are sealed from air by means of packing such as blister plastic etc. Since the employment of a method of fitting or detaching the cover by means of screws etc. makes it difficult to open or close the cover, easy fitting or detaching, or exchange of the MCD can be prevented. When needed, seals etc. may be provided, thereby prohibiting a user from opening or closing the cover, thus clarifying the maintenance responsibility. However, there may also be a need to adapt an electronic dictionary used for one language for use with a different language, for use with other scales (small, medium and large dictionaries etc.), or for use as a technical dictionary etc. Accordingly, it is desirable that the MCD can be exchanged, but that the exchange is difficult as far as possible. For this purpose, there may be employed a method such that fitting and detaching of the MCD cannot be effected unless, e.g., three operations or more are conducted.

It is preferable that the electronic dictionary of the invention can be handled as simple as possible. For this reason, it is desirable that the electronic dictionary is of unitary structure, that the MCD is incorporated within the ROM player, and that a minimum number of keys are provided on the control unit of the ROM player, thus excluding general use as far as possible to realize specialised use.

A conventional CD is constituted as a flat disk having an outer diameter of 120 mm and includes a concentric inactive region having a diameter of about 45 mm in the center thereof. Into the region having an effective area expressed as $[\pi/4 \ (120)^2 - \pi/4 \ (45)^2] \ mm^2$, about 540 MB can be stored as the number of bytes utilized for a user. The memory density thereof is fixed within the effective area. When it is assumed that the outer diameter is 3 inches (about 75 mm) and the MCD is made up at the same memory density to store data of 128 MB therein, it is sufficient that the inactive region has a diameter approximately equal to that of the active region of the conventional CD. In this case, the width in a radial direction of an annular section of the active area is about 15 mm. Thus, the MCD which has a small difference between its inner and outer radius and a simple and inexpensive track selection mechanism can be used. Since the difference between the circumferential line speed of the inside track and that of the outside track at a certain MCD rotational frequency is reduced, a fixed rotational frequency system may be employed. Even if rotational frequency control is conducted so that the circumferential speed is fixed, the ratio of the control rotational frequency is nearly equal to 1. Thus, a control system which is simple and inexpensive as a servo control system can be used.

An implementation is possible such that the MCD itself is also small-sized and its thickness becomes small as well, resulting in a low cost MCD. In addition, various modifications may be implemented such that the diameter of the inactive region is further reduced for the purpose of allowing the outer radius to be less than 3 inches, and the diameter of the active region may be further reduced for the purpose of realizing low cost by lowering the memory density, and the like.

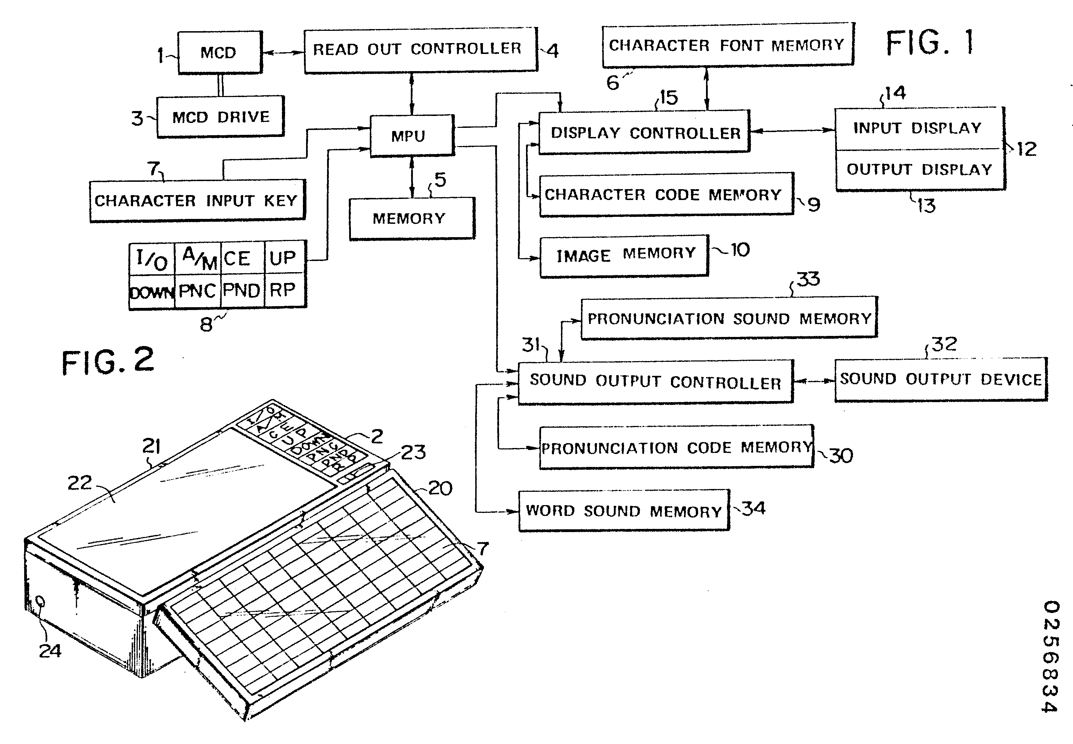

Fig. 1 is a block diagram illustrating an electronic two language dictionary wherein such a MCD is used as the small-sized ROM and the English-Japanese dictionary and the Japanese-English dictionary are accommodated as a pair therein.

In this figure, MCD denotes a microcompact disk. Reference numeral 3 denotes a MCD drive for rotating the MCD, which is composed of motor and a servo system etc. Reference numeral 4 denotes a readout controller for reading data from the MCD, which includes an optical reader for the MCD, a track selection mechanism and its controller, a mutual conversion circuit for effecting conversion of the user byte (8 bits) to the CD byte (e.g., 14 bits) and vice versa, an error correction circuit, and the like. The technologies which have been employed in conventional CD can be applied to these circuits. A portion of these functions may be realized by using a microcomputer MPU.

Reference numeral 5 denotes a ROM memory associated with the MPU. Reference numeral 7 denotes a key board 7 for inputting characters. Since the kinds of characters in Japanese are too many in the case of the English-Japanese and the Japanese-English dictionaries, it is desirable to input characters in the form of Roman letters. Such an inputting method is convenient in that inputting operation can be performed using the alphabet in either case of the English-Japanese dictionary or the Japanese-English dictionary. In addition, in the case of languages such that the kinds of letters are not so many and the character fonts are extremely different from each other as in the Arabic, a method to indicate at least two kinds of different characters such as Katakana or Roman letters on the key top, and select the kind by operating the shift key, or a method to fit an overlay

0256834

over the key or the like may be employed. Reference numeral 8 denotes a function key group. In the case of the simplified operation, it is sufficient that this function key group 8 includes at least an input/output (I/O) key, a clear [CE] key, scroll UP [↑] key, and a scroll DOWN [↓] key. In addition, when an input mode [A/M] key is additionally provided, the discrimination between kinds of languages by the software can be omitted. In the case of the English-French dictionary, the English-Italian or the like in which the same Roman letters are used, the [A/M] key cannot be omitted, so that five keys are required.

Reference numeral 6 denotes a character font memory for generation of character fonts. When a language used is fixed, a mask ROM may be used. Further, there may be employed a method using a RAM to store character font data in the MCD in advance, thus to effect copying from the MCD to the RAM as a portion of the initial sequence when powered. The last-mentioned method is advantageous in the case that various languages are handled by exchange of the MCD or in the same MCD. In addition, an EEPROM may be used.

Reference numeral 15 denotes a display controller. This controller 15 writes a character sent out from the MPU into an image memory 10 provided therein by making use of the character font memory 6 depending on whether the display unit 12 is of storage type or refresh type and drives the display unit 12.

The display unit 12 is divided into an output display section 13 and an input display section 14. For these display sections 13 and 14, a planar type display device of liquid crystal, photochromic, or EL (Electroluminescence) etc. may be used. For the time being, a liquid crystal display of a sort used in a portable liquid crystal television is suitable for the display device for reasons of lower power dissipation, low voltage, use results, cost performance etc., but it may be substituted by an externally connectable home television or the like.

Instead of display, printing may be conducted using a printer of a standard type. Further, a method may be employed to allow the display unit 12 to have a function of touch panel, thereby to display a character key or a functional key in the input mode through the MPU to effect inputting operation by touching the portion displayed. This method permits the character input key group 7 and the functional key group 8 to be omitted, thus enabling the dictionary to be further small-sized. Furthermore, in place of the character input key 7 etc., a microphone and a voice recognition circuit may be used to conduct a sound inputting.

For the purpose of allowing the electronic dictionary of the invention to be small-sized and of desk-top or carrying type etc., it is preferable to employ a structure in which all components are integrally formed.

It is desirable to construct the keyboard using pressure-sensitive elements etc. so that it is of the planar type. Since a liquid crystal which has a touch-inputting function permits the character key board to be omitted, such a display is advantageous in that it is not only effective in view of small-sized implementation and simplicity, but also makes it easy to change the character font display of the key top when conversion of the language kind is conducted by exchange of MCD etc.

It is needless to say that a power supply can be constituted by an ac power supply. The employment of a battery as the power supply is more convenient. Since a power supply pack which has a function equivalent to that of a battery due to conversion from ac to dc is widely used, the additional provision of such a power supply pack to use its dc power supply is more convenient. It is also possible to use a chargeable battery.

Since it is not desirable that the power switch is unnecessarily cut off or turned on due to the influence of beginning of the rotation of MCD, the initial sequence or the like, it is desirable that the power switch is of slide type.

When the electronic dictionary is of carrying type, the area of the display device is limited and the capacity of the output display is also limited. There are many instances where the number of characters displayed is smaller than that of the desk-top type, so that all the descriptions D are not displayed at the same time. In such a case, the above-mentioned scrolling function is helpful.

For protecting the liquid crystal display or the functional key board etc. from impact or pressure externally applied during carrying of the electronic dictionary, the provision of a cover is preferable. This cover may be in the form of book cover, or may be provided on the dictionary body so as form a single pivotable title leaf. Where the touch panel is not used, it is convenient to provide the planar type character input key 7 on the inside surface of the single pivotable cover 20. Referring to Fig. 2, there is shown a substantially rectangular casing 21 of the dictionary body. When its size is chosen to be in correspondence with any one of standard sizes of books being published at present, it is convenient to exhibit it on a bood shelf or to carry it within a bag. Reference numerals 22 and 23 denote a liquid crystal display and a slide type power switch which have been mentioned above, respectively. In addition, reference numeral 24 denotes a dc power connection terminal from an external power supply.

The function to effect a sound output of pronunciation of an index word C will be now explained. There are known various methods of effecting a sound output. Two examples thereamong will be described.

In accordance with the first method, a voice pro- nonced is subjected to A/D conversion for each index word C in the ROM as in a music CD, and the voice data thus obtained is stored along with the function code. During indexing, the voice data is copied into the memory 5 of the ROM player 2. When the pronunciation [PNC] key is depressed in the function key board, the portion designated by the function code is transferred to the pronunciation memory 30. The sound output controller 31 repeatedly reads, one time or a predetermined number of times every time the [PNC] key is depressed, or during which depression of the key is continued, a digital signal indicative of sound of a pronunciation of a particular word in a range designated by the function code thereafter to apply D/A conversion to the digital voice data by using the same means as the music CD, thus to effect a sound output by means of the sound output device 32 such as a speaker.

In accordance with the second method, a pronunciation sound memory 33 corresponding to pronunciation symbol is provided in the ROM player 2 to sequentially read the pronunciation sounds in accordance with the pronunciation symbol code and to prepare a time train of the intensity of sound on the basis of the position, kind of the accent and intonation to synthesize a sound output to store the synthesized sound output into the word sound memory 34, thus to effect a sound output using the sound output device 32. The second method can be used in the same manner as the first method.

The first method has the drawback that the memory capacity of the ROM becomes large, but the advantage that very delicate pronunciation can be reproduced with fidelity. On the other hand, the second method has no necessity of increasing the memory capacity of the ROM, but requires, on the side of the ROM player, a circuit for converting the code train to the pronunciation sound train, allowing it to have accent and has the drawback that a sound obtained is artificial and delicate pronunciation cannot be reproduced. It is preferable that the first and second methods are suitably used in accordance with the purpose of an electric dictionary in consideration of the respective advantages and drawbacks.

The function of effecting a sound output of a description D will be now explained. In this case, the ROM is required as its contents to have sound data of spelling and the pronunciation symbol of the index word C, and the description corresponding thereto. It is desirable for the purpose of indexing that the spelling and the pronunciation symbol are written as codes. The description D may be written as a data train obtained by applying A/D conversion to sound, or may be all written as codes of pronunciation symbol. In the case of the data train in which sound data has been subjected to A/D conversion in the index word S and the description D including pronunciation symbol which have been read into the memory 5 by the ROM player 2, the sound output can be obtained in accordance with the same system as that of ordinary music CD. In the case of the pronunciation symbol code train, by using the pronunciation sound memory 33, the sound output controller 31 applies sound synthesis processing to words transferred from the memory 5 to the pronunciation code memory 30 in succession one by one on the basis of the kind and the position of accent and the intonation, thus to effect a sound output using the sound output device 32. When the pronunciation [PND] key is depressed, the sound output is conducted in the same manner as in the case of the depression of the [PNC] key.

It is preferable that where sound cannot be sufficiently understood at one time because the sound output is temporary, a repeat [RP] key is provided at the function key group 8 to repeat a sound output once or a predetermined number of times every time the [RP] is depressed, or to continuously repeat a sound output when the [RP] is continuously depressed.

The electronic dictionary according to the illustrated embodiment is mainly used exclusively for private or personal use. In addition, if this electronic dictionary is connected to a central large optical disk in an office etc., an electronic dictionary using CD etc., or a terminal of information retrieval system through an interface, it can be used for the terminal thereof. In this instance, since the electronic dictionary has a key input function, display function, the function of preparing a list of words used, or the like, it is convenient for the terminal. Although the advantage with such an implementation is that the terminal is small-sized, an important feature is that a list of words used can be prepared for private use, whereby individual persons can be taught with their terminal being separated from a central system. Where the central system is an information retrieval system or a textbook etc., the list of words used can have a function of an electronic note or an electronic memorandom, thus to provide a file peculiar to an individual.

The effect or operation of the electronic plural language dictionary in the illustrated embodiment will be explained with reference to Fig. 1.

When powered, the MCD is driven by the MCD drive 3. When a user waits for a time period designated in advance until the rotation frequency of the MCD reaches a prescribed rotation frequency, or when an output of a rotation frequency sensor reaches a normal rotation frequency, the initial sequence data incorporated in the MCD is read by the microcomputer MPU. The data thus read is copied into the memory 5 and the character font memory 6 etc. It is to be noted that the initial sequence data is composed of various control programs, a Table showing an existence area (block) on the MCD of the word groups having the same combination with respect to the combination of the number of characters designated from the word head of the index word C and the description of the word concerned, the character font data for the characters, and the like.

The blank area of the memory 5, the character code memory 9 and the image memory 10 are then reset. Finally, by the control program set in advance, the system is automatically placed in input mode. Thus, "READY" is displayed on the output display section 13 of the display unit 12.

Every time the input/output [I/O] key in the function key group 8 is repeatedly depressed, the MPU effects a switching operation so that the mode of the system is changed to the input or output mode in turn. In the input mode, "READY" is displayed on the input display area 14.

When the input mode [A/M] key in the function key group 8 is repeatedly depressed, the input modes of "A to M" (indicating the change from language A to language M) and

"M to A" (indicating the change from language M to language A) are selected in turn.    An explanation will be made in connection with the case where "A to M" mode is selected.

Where the mode of "A to M" is selected, when characters of an  index word C of the language A are successively input from the word head thereof from the character input key board 7, they are displaced on the input display section 14 by the MPU.  Where there is an error in the inputting operation, the error is deleted by the clear (CE) key in the function key group 8 to input a correct character for a second time.  After inputting is correctly performed, when the [I/O] key is depressed, the mode shifts to the output mode.

The MPU recognizes the number of characters designated from the word head of the index word C, e.g., five characters to read a block position on the MCD corresponding thereto from the Table, thus allowing the readout controller 4 to read the block concerned.  Ordinarily, the block has a memory capacity of about 2 KB.  There are instances where a plurality of blocks are read.  Then, the MPU indexes the index word C and its description D on the basis of the data of the block thus read to write them into an index data region of the memory 5.

Subsequently, the index word C is displayed on the first line of the input display section 14 and the description D is displayed on the output display section 13 from the head thereof.  It is desirable that the pronunciation symbol is displayed on the first line.  When the length of the description D is longer than the number of lines of the output display section 13, e.g., six lines, such a description cannot all be displayed. However, when the scroll UP [↑] key in the function key group 8 is depressed for a moment, it is possible to observe such a description by scrolling line by line. When the [↑] key is successively depressed, scrolling is conducted every a predetermined time interval, e.g., per one second. The scrolling in an opposite direction is similarly performed by the scroll Down [↓] key in the function key group 8.

It is convenient that when all or a portion of the correlated word F in the description D appears on the first line of the output display section 13 by the scrolling in an upward direction, the correlated word F is also displayed on the second line of the input display section 14. This is an implementation of hierarchy such that the index word C and the correlated word F are assumed as a parent and a child, respectively. When a second correlated word F2 is displayed on the first line of the output display section 13 by the subsequent scrolling in an upward direction, a control can be performed such that the word on the first line of the output display section 13 is unchanged, whereas the word on the second line thereof is rewritten into the correlated word F2. Where scrolling in an upward direction is further conducted, even when the correlated word F in the description D disappears, such a display is convenient in that the correlated word F is displayed on the input display section 14.

In the case of scrolling in a downward direction, it is desirable to rewrite the correlated word F displayed on the input display section 14 when the correlated word F on the first line of the output display section 13 is down to the second line thereof. For this purpose, it is required to successively store the correlated words F extracted at the time of scrolling in an upward direction into the memory 5.

When the pronunciation [PNC] key or [PND] key in the function key group 8 is depressed, sound output of an index word or a description is conducted from the sound output device 32 such as a speaker.

The output mode has been described above. It is convenient that the mode is caused to shift to the input mode by depressing the [I/O] key irresective of the state of the output mode.

Advantages obtained with the electronic dictionary according to the illustrated arrangement include the following.

(1) Since a small-sized ROM having a necessary and sufficient memory capacity is used, the electronic dictionary small-sized, with the result that it is convenient to carry it.

(2) The index word C is assumed as a parent and the correlated word F related to the index word C is assumed as a child, thereby allowing the index word C and the correlated word F to be hierachized, the unit thus displays the index word C, and/or the correlated word F related to the index word C which have been hierachized on the input display section 14 and displays the description D corresponding to the word(s) displayed on the input display section 14 on the output display section 13. Thus, even in the case where all the description D of the index word C cannot be displayed unless scrolling in an upward direction is conducted because the screen is small, the illustrated electronic dictionary is very covenient in that it is readily seen that the description displayed on the output display section 13 corresponds also to the description of any correlated word of the index word C.

(3) Since various functions necessary for an electronic dictionary and the large capacity memory medium 1 are collectively provided within the casing of the ROM player 2, thus allowing the entirety of the electronic dictionary to be of unitary structure, the electronic dictionary is small-sized and is convenient to carry.

(4) Since sound output for the pronunciation of the index word is possible, the study of correct pronunciation can be also conducted.

(5) Since sound output of the description is also possible, even an unlettered person or a blind person can use this electronic dictionary.

(6) When there is provided an electronic dictionary of small-size in which the diameter of the disk or the length of one side of the card is less than 3 inches and the memory capacity is in a range from 2 MB to 128 MB, it is easy to carry the electronic dictionary because it can be received into a pocket of European clothes or even underwear.

(7)  When there is employed a method of storing data of two dictionaries, e.g., the English-Japanese dictionary and the Japanese-English dictionary, the German-Japanese dictionary and Japanese-German dictionary or the like in the large capacity memory medium,  it is advantageous  in that a single electronic dictionary can serve as two kinds of dictionaries or more.

Claims:

1. An electronic dictionary comprising a relatively large capacity memory medium (ROM) for storing data E consisting of index words C and descriptions D corresponding to said index words C, and means for reading said data E from said memory medium to provide a visual display thereof and, optionally, a printed and/or sound output, such means including a display unit having an input display section and an output display section, each having one or more display lines, said descriptions D each including at least one correlated word F related to the corresponding index word C wherein, in use, an index word and/or a correlated word F related to the index word C is/are displayed on said input display section whilst a description D relating to the word displayed on said input display section is displayed on the output display section.

2. An electronic dictionary as claimed in claim 1, wherein a space for accommodating said large capacity memory medium is formed in a casing containing said reading means and operating means for the electronic dictionary such as a power unit, an input unit, a display unit, and an operational control unit or the like are provided in the casing thus providing said electronic dictionary with a unitary structure.

3. An electronic dictionary as claimed in claim 1 or 2 wherein the description displayed on said display unit can be scrolled.

4. An electronic dictionary as claimed in any preceding claim, comprising means for producing a sound output of a pronunciation of each index word C.

5.     An electronic dictionary as claimed in any preceding claim comprising means for producing a sound output of each description D.

6.     An electronic dictionary as claimed in any preceding claim wherein each index word C and corresponding description D are in a single language.

7.     An electronic dictionary as claimed in any of claims 1 to 5 wherein each index word C and corresponding description D are in different languages from each other.

8.     An electronic dictionary as claimed in any preceding claim wherein said large capacity memory medium comprises a high density recording medium, such as an optical disk, a compact disk, an IC memory card, a magnetic bubble or the like, said recording medium being of relatively small size so that the diameter of the disk or the length of one side of the card or the like less than three inches, the memory capacity being in a range from 2 MB to 128 MB.

9.     An electronic dictionary as claimed in any preceding claim wherein data E1 comprising an index word C in a language A and a description D in a language B, and data E2 comprising another index word C in said language B and another description D in said language A are combined as paired data E3, at least one type of such paired data E3 being stored in said large capacity memory medium.

10.     An electronic dictionary as claimed in claim 9, wherein said reading means is adapted so that it can display respective index words of said paired data E3.

11.   An electronic dictionary as claimed in any preceding claim wherein an index word C is assumed as a parent and a correlated word or words F such as an idiomatic phrase or idiom corresponding to the index word C is assumed as a child, thus allowing the index word C and the correlated word F to be hierarchized, whereby the index word C and/or the correlated word F related to the index word C which have been hierarchized are displayed on the input display section of the reading means, whilst the description D corresponding to the word displayed on the input display section is displayed on the output display section.

12.   An electronic dictionary wherein the description includes pronunciation symbols and/or translations for the corresponding index words.

# FIG. 1

- 1 MCD
- READ OUT CONTROLLER — 4
- 3 MCD DRIVE
- MPU
- 5 MEMORY
- 7 CHARACTER INPUT KEY
- CHARACTER FONT MEMORY
- 6
- 15 DISPLAY CONTROLLER
- 14 INPUT DISPLAY
- 12
- OUTPUT DISPLAY
- 13
- CHARACTER CODE MEMORY — 9
- IMAGE MEMORY — 10
- 33 PRONUNCIATION SOUND MEMORY
- 31 SOUND OUTPUT CONTROLLER
- 32 SOUND OUTPUT DEVICE
- PRONUNCIATION CODE MEMORY — 30
- WORD SOUND MEMORY — 34

| I/O | A/M | CE | UP |
|------|------|------|------|
| DOWN | PNC | PND | RP |

8

# FIG. 2

21
22
24
23
20
2
7

0256834